# EUROPEAN PATENT APPLICATION

(11) **EP 3 855 556 A1**
(43) Date of publication of application: **28.07.2021**
(21) Application number: 21152979.7
(22) Date of filing: 22.01.2021
(51) Int. Cl.: H01M 10/653, H01M 10/6555, H01M 10/6557, F28D 1/04

(54) **A THERMAL PROTECTION PLATE ASSEMBLY FOR BATTERIES**

(30) Priority: 23.01.2020 TR 202001078
(71) Applicant: Altinay Robot Teknolojileri San ve Tic A.S., 34953 Istanbul (TR)
(72) Inventor: CAKAN, ERHAN, 34956 stanbul (TR); SANCAK, KAMIL VEDAT, 34744 Istanbul (TR); TOSUNOGLU, SELMAN, 34956 stanbul (TR)
(74) Representative: Sevinç, Erkan

(57) **Abstract**

The present invention relates to a thermal plate assembly (7) for use in electric vehicle battery systems for purposes of temperature control, comprising a conveying pipe (1) that allows fluid to pass therethrough, which is positioned between two thermal walls (2) that are mechanically connected to each other. Said thermal plate comprises an insulation wall (6) positioned in a closed volume formed between the two thermal plate assemblies (7) and occupying the closed volume, and an insulation housing where the conveying pipe (1) extending in a curved manner within the insulation wall (6) is positioned. With the insulation wall (6) developed within the scope of the invention, it is aimed to obtain a thermal plate assembly (7) that is thermally safer and can fit into a narrower space in terms of its volume.

## Description

### Technical Field of the Invention

The present invention relates to an integrated thermal protection plate suitable for use in vehicle batteries.

### Background Art

It is known to use cooler plates for existing battery cooling systems in vehicles, especially electric vehicles. In general, in systems that are used based on fluid passage through the multi-layered aluminum plates, battery systems are cooled or heated according to the temperature of the fluid passing between the plates.

In the state of the art, the aluminum used transmits heat very well and melts around 500 °C and cannot insulate the battery cells and the relevant modules from other modules or cells where the burning starts, in case of a thermal burning. The insulation materials against burning that are located between the cells cannot maintain the heat transfer at the desired level.

In addition, the size of the thermal plates increases gradually in the structures where the efficiency is desired to be increased, which is a problem in cases where there is a shortage of space. In particular, there is a need for an effective thermal plate that serves as a burning barrier and that can also control cooling/heating.

### Objects of the Invention

The main object of the present invention is to provide a thermal plate assembly which has a high efficiency heating/cooling performance and which is also thermally safer and can fit into a narrower space in terms of its volume.

Another object of the present invention is to provide a thermal plate assembly that minimizes the risk of burning even in the event of an accident and keeps the risk of spreading throughout the vehicle as low as possible even if the burning starts.

According to another object of the present invention, it is possible to create an additional thermal barrier due to the magnitude of the phase change energy at 90 degrees, where the cells lose their thermal stability, with the added materials by determining the solid-liquid phase change temperature.

### Summary of the Invention

The present invention relates to a thermal plate assembly for use in electric vehicle battery systems for purposes of temperature control, comprising a conveying pipe that allows fluid to pass therethrough, which is positioned between two thermal walls that are mechanically connected to each other. Said thermal plate comprises an insulation wall positioned in a closed volume formed between two thermal plates, and occupying the closed volume, and a housing in which the conveying pipe extending in a curved manner within the insulation wall is positioned.

In a possible embodiment of the invention, said conveying pipe comprises a conveying pipe element positioned at both ends thereof protruding from the thermal wall, which allows passage of the fluid to the conveying pipe.

In a possible embodiment of the invention, each end of the conveying pipe comprises a valve to allow only one-way flow of the fluid.

In a possible embodiment of the invention, there is an insulation wall sized and shaped to completely cover the space between the thermal walls.

In a possible embodiment of the invention, there are a number of opposing recesses on the insulation wall to match with a number of protrusions on the thermal wall.

In a possible embodiment of the invention, there are a number of opposing protrusions on the insulation wall to match with a number of recesses on the thermal wall.

In a possible embodiment of the invention, said two thermal walls are connected to each other by welding, soldering or adhesive.

### Brief Description of the Drawings

The thermal plate which is the subject of the present invention is illustrated in the accompanying drawings for better understanding thereof, which drawings are attached for better explaining the present invention and are not limiting the invention, in which:

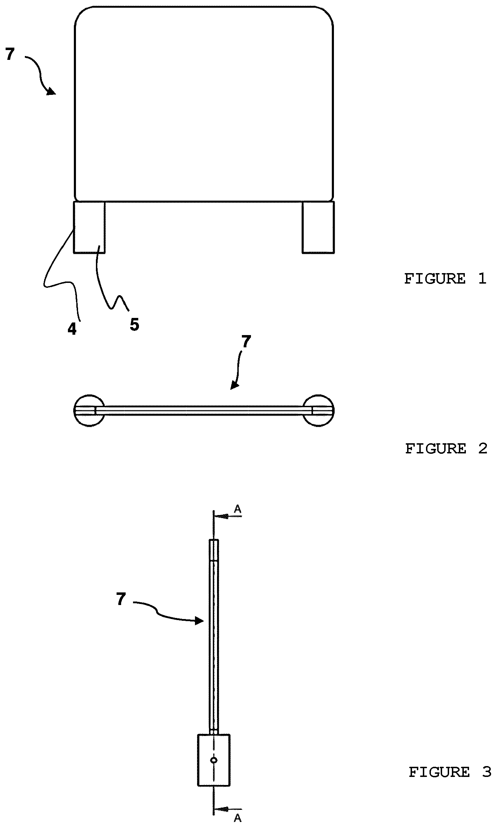

Figure 1 is a front view of a thermal plate presented according to the present invention.
Figure 2 is a top view of the thermal plate presented according to the present invention.
Figure 3 is a side view of the thermal plate presented according to the present invention.
Figure 4 is an A-A cross-sectional view of the thermal plate presented according to the present invention, as shown in Fig. 3.
Figure 5 is a perspective view of the thermal plate presented according to the present invention.
Figure 6 is an exploded view of the thermal plate presented according to the present invention.
Figure 7 is an exploded view of the thermal plate presented according to the present invention, taken from a different angle.

### Detailed Description of the Invention

The invention will now be explained in detail with reference to the accompanying drawings and the list of reference numerals used in the appended drawings is as follows.
1. Conveying pipe
2. Thermal wall
3. Thermal adhesive element
4. Valve
5. Conveying pipe element
6. Insulation wall
7. Thermal plate assembly

The thermal plate assembly (7) presented within the scope of the present invention generally describes the use of a conveying pipe (1), which is positioned between two identical thermal walls (2) and extends in a curved manner, together with one or more insulation walls (6). Said thermal plate assembly (7) has been devised especially for use in battery systems of electric vehicles, and when in use, it is located between two lithium-ion cells and is in surface contact with the cell walls to perform the necessary heat treatment.

Said thermal plate assembly (7) includes a conveying pipe (1) allowing fluid to pass therethrough, between two mechanically connected thermal walls (2), for use in electric vehicle battery systems for purposes of temperature control. There is one or more insulation walls (6) that are positioned in a closed volume formed between said two thermal plate assemblies (7) and occupying the closed volume, and an insulation housing where the conveying pipe (1) extending in a curved manner within the insulation wall (6) is positioned. The insulation housing is formed by one or more insulation walls (6), and is preferably positioned to cover the circumference of the conveying pipe (1). In different embodiments, suitable movement housings may also be formed on the insulation wall. The insulation wall (1) or walls surround the conveying pipe (1) and are covered on the thermal adhesive element (3), preferably being two in front and at the back. In the last stage, the thermal walls (2) form the closed volume, thereby forming the thermal plate assembly (7) with appropriate valve (4) and conveying pipe elements (5).

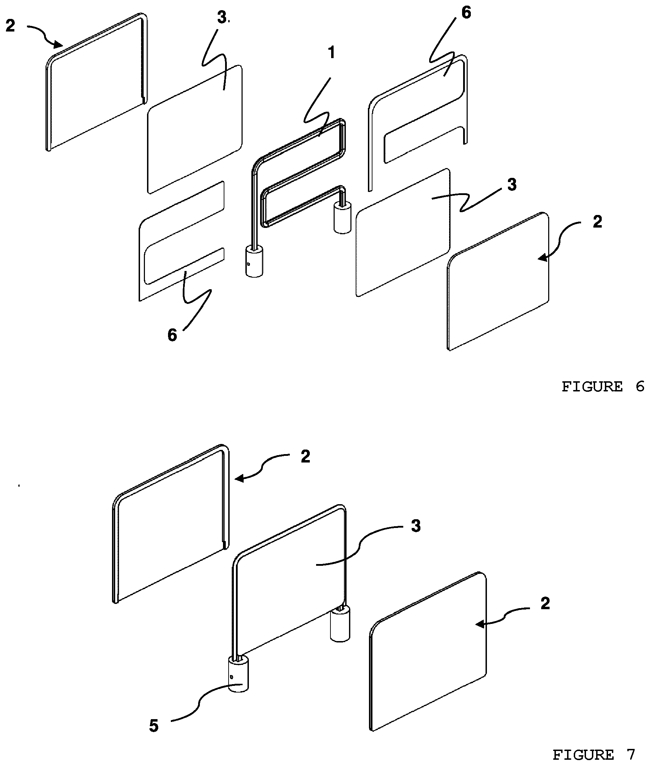

Referring to Fig. 6, two interlocking insulation walls (6) cover the area outside the conveying pipe (1) formed between the two thermal walls (2) and located in the closed volume, allowing the heating or cooling power in the conveying pipe to be directed to the thermal walls (2). Said insulation walls (6) act as a barrier between each of the thermal walls (2) in case of a possible fire in the battery system of electric vehicles, thanks to its high temperature resistance, thus providing thermal insulation.

The thermal walls (2) forming the thermal plate assembly (7) presented within the scope of the present invention are preferably mechanically connected to each other, and the conveying pipe (1) extending in a curved manner (2) as well as the insulation wall (6) are confined between the two thermal walls. The surface contact between the conveying pipe (1) and the thermal wall (2) elements in said thermal plate assembly (7) is not the same due to the factors resulting from the production and the surfaces do not contact each other at some points. In addition, a thermal gel suitable for use as a thermal adhesive element (3) is applied on the surfaces of the thermal wall (2), so that it fills the spaces between the conveying pipe (1) and the thermal wall (2) to thus increase the heat transfer. It is also possible to use different elements other than the gel as the thermal adhesive element (3), that may be applied in a similar manner.

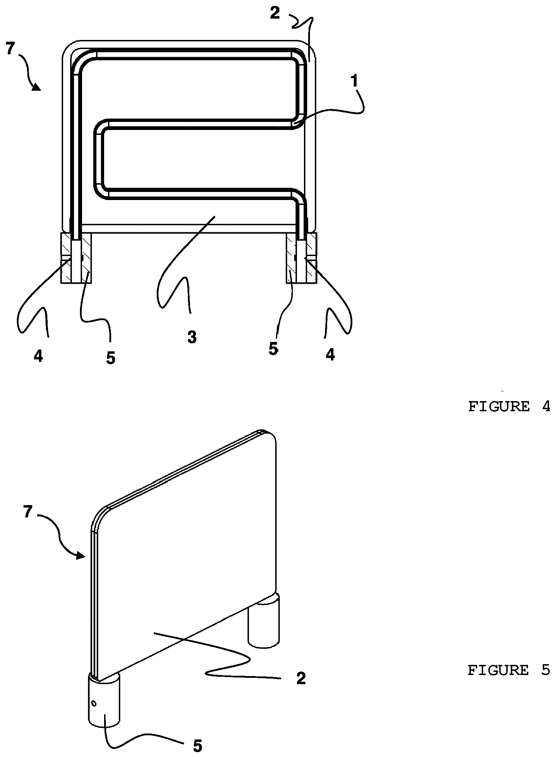

As illustrated in the cross-sectional view in Fig. 4, the connection of said thermal plate assembly (7) with the environment is preferably provided by one conveying pipe element (5) reciprocally extending from the lateral edges, being two in total, and suitable for passage of the fluid therethrough. Due to the conveying pipe elements (5), a connection structure of which is suitable to be used as a flange member, for example, no fluid or gas other than the fluid passing through the thermal plate assembly (7) can enter into or exit from the volume confined by the thermal walls (2).

The mechanical connection between said two thermal walls (2) is achieved by welding, soldering or by an adhesive depending on the physical conditions of operation such as temperature and pressure, electrochemical conditions such as corrosion, and the resistance of the lithium-ion cells to the electrolyte chemistry. The heat energy generated in the lithium-ion cells is absorbed by using water, a water/glycol mixture and/or another suitable fluid to be passed through the fluid conveying pipe (1), or the fluid carrying the heat energy required for the heating of the cells is circulated in the conveying pipe (1). The diameter, length, bending angle, radius, material and cross-section (circle, oval, ellipse, etc.) of the fluid conveying tube (1) is varied.

As illustrated in the perspective view of Fig. 6, the fluid conveying pipe (1) and the insulation wall (6) are located between two thermal walls (2). The thermal wall (2) contacts the walls of the lithium-ion cells and the fluid conveying pipe (1), and ensures heat transfer between the two parts. The insulation wall (6) according to the invention prevents heat exchange between the thermal walls (2) on both sides. The insulation wall (6) also prevents the heat that will result from an exothermic reaction based on a "thermal runaway" that may occur in the lithium-ion cells from reaching the other cells and physically stops the flames that will occur during burning.

The conveying pipe element (5) is located at both ends of the fluid conveying pipe (1) and provides a mechanical connection to the fluid circulation system and a safe fluid exchange without causing leakage. A valve (4) located next to the conveying pipe element (5), on the other hand, discharges the fluid that will fill the inside of the thermal plate assembly (7) due to the damage to the fluid conveying pipe (1). It is possible to use a check valve as a mechanical control element for said valve (4), which allows one-way passage.

Referring to Figs. 6 and 7, there are a number of opposing recesses on the insulation wall (6) to match with a number of protrusions on the thermal wall (2), by which the insulation wall (6) is held securely between the thermal walls (2). Said protrusions may have different cross sections, or may be configured to have the same geometry. It is also possible for these protrusions to extend on a certain axis. Likewise, this time, there may be a number of opposing protrusions on the insulation wall (6) to match with a number of recesses on the thermal wall (2).

## Claims

1. A thermal plate assembly (7) for use in electric vehicle battery systems for purposes of temperature control, comprising two thermal walls (2) that are mechanically connected to each other, and a conveying pipe (1) positioned between the thermal walls (2) and allowing fluid to pass therethrough, **characterized by** comprising at least one insulation wall (6) positioned in a closed volume formed between said two thermal walls (2), and occupying the closed volume, and an insulation housing in which the conveying pipe (1) extending in a curved manner within the at least one insulation wall (6) is positioned.

2. A thermal plate assembly (7) according to claim 1, **characterized in that** said conveying pipe (1) comprises a conveying pipe element (5) located at both ends thereof protruding from the thermal wall (2), which allows passage of the fluid to the conveying pipe (1).

3. A thermal plate assembly (7) according to claim 1 or 2, **characterized in that** each end of said conveying pipe (1) comprises a valve (4) so as to allow only one-way flow of the fluid.

4. A thermal plate assembly (7) according to any one of the preceding claims, **characterized by** comprising an insulation wall (6) sized and shaped to completely cover the space between said thermal walls (2).

5. A thermal plate assembly (7) according to any one of the preceding claims, **characterized by** comprising a number of opposing recesses on said insulation wall (6) to match with a number of protrusions on the thermal wall (2).

6. A thermal plate assembly (7) according to any one of claims 1-4, **characterized by** comprising a number of opposing protrusions on said insulation wall (6) to match with a number of recesses on the thermal wall (2).

7. A thermal plate assembly (7) according to any one of the preceding claims, **characterized in that** said two thermal walls (2) are connected to each other by welding, soldering or adhesive.

8. A thermal plate assembly (7) according to any one of the preceding claims, **characterized by** comprising at least one thermal adhesive element (3) suitable for connecting to thermal walls (2) and acting as an insulation.

9. A thermal plate assembly (7) according to claim 8, wherein said thermal adhesive element (3) is a gel.
